# EUROPÄISCHE PATENTSCHRIFT

(11) **EP 1 318 179 B1**
(45) Veröffentlichungstag und Bekanntmachung des Hinweises auf die Patenterteilung: **12.01.2005**
(21) Anmeldenummer: 02026457.8
(22) Anmeldetag: 27.11.2002
(51) Int. Cl.: C09D 5/08, C09D 175/08

(54) **Verwendung von mit speziellen hydrophobierenden Weichharzen modifizierten, lösemittelfreien 2K-Polyurethan-Reaktivsystemen zur Herstellung von dehnbaren und Kathodenschutz verträglichen Beschichtungen**
Use of solventless 2 component polyurethane reactive systems modified with hydrophobic plastifiers for preparing elastic coatings compatable with cathodically protected surfaces
Utilisation de systèmes sans solvant de polyuréthane réactives à deux composants modifiés par des plastifiants hydrophobes pour la préparation de revêtements élastiques compatibles avec des surfaces traitées cathodiquement

(30) Priorität: 04.12.2001 DE 10159374
(43) Veröffentlichungstag der Anmeldung: 11.06.2003
(73) Patentinhaber: Bayer MaterialScience AG, 51368 Leverkusen (DE)
(72) Erfinder: Schwindt, Jürgen, Dr., 51373 Leverkusen (DE); Homan, Malte, Dr., 51519 Odenthal (DE); Kolping, Karl-Heinz, 51377 Leverkusen (DE)

(56) Entgegenhaltungen:
- EP-A- 0 376 674
- WO-A-01/79369
- DATABASE WPI Week 9904 Derwent Publications Ltd., London, GB; AN 1999-040914 XP002234334 & JP 10 298456 A (JIN), 10. November 1998 (1998-11-10)
- DATABASE WPI Week 8736 Derwent Publications Ltd., London, GB; AN 1987-253379 XP002234335 & JP 62 174220 A (TAOKA CHEM), 31. Juli 1987 (1987-07-31)

## Beschreibung

Die vorliegende Erfindung betrifft die Verwendung von mit speziellen Weichharzen modifizierten, lösemittelfreien 2K-Polyurethan-Reaktivsystemen (2K-PUR) zur Herstellung Dauertemperatur beständiger, dehnbarer, hydrophober und Kathodenschutz verträglicher Beschichtungen.

Für den Korrosionsschutz von Pipelines - Öl, Gas - aber auch für Ballasttanks von Schiffen werden Beschichtungen gefordert, die eine hohe Hydrophobie, Schlagfestigkeit und Dehnbarkeit sowie Kathodenschutzverträglichkeit aufweisen. Stand der Technik im Bereich Pipelines sind "Fusion Bonded Epoxid" (FBE)-Systeme, die als Grundierung (gegebenenfalls 2 Schichten) aufgebracht werden. Dabei wird das Pulver auf dem heißen Rohr zur Reaktion gebracht. Im Sinterverfahren wird die FBE Beschichtung mit Polyethylen/Polypropylen (PE/PE) überschichtet, oder es folgt ein Aufbau mit Kleber PU-Schaum und Polyethylen.

Stand der Technik sind ferner PUR-Systeme, die als Nasslack sowohl auf das kalte Rohr bzw. die Field Joints aufgebracht werden. Die vorbeschichteten Rohre werden vor Einbau in das Pipelinenetz vor Ort gebogen.

Nachteil des Stands der Technik ist, dass die FBE-Beschichtung spröde ist und keine Steinschlagfestigkeit sowie Dehnbarkeit besitzt.

Die beim Verlegen der Rohrleitung auftretenden Biegespannungen führen zur Rissbildung in der Beschichtung und somit zum Verlust des Korrosionsschutzes. Zur Reparatur vor Ort, sowie zur Beschichtung der Field Joints können FBE-System nur mit hohem Aufwand (höherer Energiebedarf) und geringer Produktivität appliziert werden. Ep-Nass-Systeme können unter 0°C vor Ort nicht angewandt werden. Die Nachteile der reinen 2K-PUR-Systeme sind die geringere Hydrophobie und dadurch bedingt geringere Kathodenschutzverträglichkeit der Beschichtung. Die hydrophilen Eigenschaften der 2K-PUR-Systeme erfordern zum Korrosionsschutz der Rohre und Ballasttanks ferner Schichtdicken von > 1000 µm.

Die der Erfindung zugrundeliegende Aufgabe bestand daher darin, lösemittelfreie Flüssig-Grundierungen für den Korrosionsschutz von Rohren zur Verfügung zu stellen, die
a) eine Dauertemperaturbeständigkeit von bis zu 30°C bei gleichzeitiger Kathodenschutzverträglichkeit aufweisen,
b) eine Bruchdehnung von mindestens > 5 % besitzen und Schlag zäh sind,
c) durch erhöhte Hydrophobie auch in dünneren Schichten, 600 - 900 µm, dauerhaften Schutz verleihen,
d) sowohl vor Ort, als auch in einer Werkstatt appliziert werden können, und auch bei Minus-Temperaturen aushärten,
e) sowohl für das Rohr, als auch für die "Field Joints" verwendbar sind und
f) eine längere Topfzeit (bis 15 Minuten) sowie eine längere Zeit zur Spachtelverarbeitung (bis 50 Minuten) besitzen.

Gegenstand der Erfindung ist die Verwendung von lösemittelfreien Zwei- Komponenten-Polyurethan-Reaktivsystemen aus:
A) einem lösemittelfreien Polymer-Gemisch, bestehend aus
   I) 5 - 50 Gew.-% einer OH-gruppenfreien Komponente, bestehend aus
      a) 100 - 0 % eines chlorierten Paraffins oder Dibutoxybenzols,
      b) 100 - 0 % eines Di-[phenoxy-alkyl]-formals oder
      c) 100 - 0 % eines Polyacrylnitrils oder
      d) einem Gemisch aus a) und b), wobei das Verhältnis von a) : b) = 99 : 1 bis 1: 99 Gew.-% beträgt, oder
      e) einem Gemisch aus a) und c), wobei das Verhältnis a) : c) = 99 : 1 bis 1 : 99 Gew.-% beträgt oder
      f) einem Gemisch aus b) und c), wobei das Verhältnis von b) : c) = 99 : 1 bis 1 : 99 Gew.- % beträgt, und
   II) 95 - 50 % einer Hydroxylgruppen aufweisenden Komponente, bestehend aus
      a) 40 - 100 Gew.-% einer hydroxygruppenaufweisenden, ethergruppenhaltigen Komponente mit einer Funktionalität ≥ 3,5 und einem Molgewicht von 280 - 1000 oder einem Gemisch mehrerer solcher Komponenten sowie
      b) 0 - 60 Gew.-% von hydroxyfunktionellen Polyetherpolyacrylaten sowie
      c) 0 - 60 Gew.-% weiterer hydroxyfunktioneller Verbindungen
   wobei sich die Gew.-% von IIa) bis IIc) immer zu 100 Gew.-% addieren und
B) einer Polyisocyanatkomponente, bestehend aus mindestens einem organischen Polyisocyanat
wobei das NCO : OH - Äquivalentverhältnis zwischen 0,8 : 1 und 1,5 : 1 liegt, zur Herstellung von bis zu 30°C Dauertemperatur beständigen und Kathodenschutz verträglichen Beschichtungen.

Bei der OH-gruppenfreien Komponente 1a) handelt es sich um chlorierte Paraffine wie sie unter der Handelsbezeichnung ®Hordaflex, Typen LC und SP, (Hoechst)®, Cerechlor®, Typen 70/42 (ICI)®, Rishichlor® (Rishiroop) vertrieben werden, oder um Polychlorodibutoxybenzol (Rishiroop).

Bei der Komponente 1b) handelt es sich um Di(phenoxy-ethyl)formal, wie es unter der Handelsbezeichnung ®Desavin (Bayer) im Markt erhältlich ist.

Bei der Komponente 1c) handelt es sich um ein Polyacrylnitril vom mittleren Molekulargewicht 600 - 3000.

Bei der hydroxylgruppenhaltigen Komponente IIa) handelt es sich um Polyetherpolyole, die z.B. durch Addition cyclischer Ether, wie Ethylenoxid, Propylenoxid, Styroloxid, Butylenoxid oder Tetrahydrofuran an Startermoleküle wie ethergruppenfreie, mehrwertige Alkohole, Aminoalkohole oder Amine in an sich bekannter Weise zugänglich sind, mit einem Molgewicht von 280 - 1000, vorzugsweise 350 - 700 und ganz besonders bevorzugt 400 - 500. Die Funktionalität der Startermoleküle muss hier bzgl. der Umsetzung mit cyclischen Ether ≥ 3,5, bevorzugt ≥ 4 sein. Besonders bevorzugt sind Polyether, die zu mindestens 50 %, insbesondere zu mindestens 90 %, bezogen auf die Summe ihrer Wiederholungseinheiten, aus Wiederholungseinheiten der Struktur - CH(CH₃)CH₂O - aufgebaut sind.

Als Startermoleküle geeignete, mehrwertige Alkohole seien beispielhaft genannt: Glycerin, Trimethylolpropan, Butantriol-(1,2,4), Hexantriol-(1,2,6), Bis-(trimethylolpropan), Pentaerythrit, Mannit oder Methylglykosid.

Geeignete Aminoalkohole sind z.B. 2-Aminoethanol, Deithanolamin, 3-Amino-1-propanol, 1-Amino-2-propanol, Diisopropanolamin, 2-Amino-2-hydroxymethyl-1,3-propandiol und/oder deren Gemische.

Geeignete mehrwertige Amine sind insbesondere aliphatische oder cycloaliphatische Amine, wie z.B. Ethylendiamin, 1,2-Diaminopropan, 1,3-Diaminopropan, 1,4-Diaminobutan, 1,3-Diamino-2,2-dimethylpropan, 4,4-Diaminodicyclohexylmethan, Isophorondiamin, Hexamethylendiamin, 1,12-Dodecandiamin oder aromatischen Aminen, wie z.B. die Isomeren des Toluylendiamins und/oder deren Mischungen.

Die Herstellung der gegebenenfalls vorhandenen Polyhydroxykomponente IIb) des erfindungsgemäßen Bindemittelgemisches kann z.B. nach EP-A 825210 erfolgen.

Bei der Alkoholkomponente IIc) oder mehrere Hydroxyverbindungen des Molgewichts 32 - 1000. Bevorzugt eingesetzt werden dabei niedermolekulare Hydroxyverbindungen des Molgewichts 32 - 350, wie z.B. Methanol, Ethanol, Propanol, Butanol, Hexanol, 2-Ethylhexanol, Cyclohexanol, Stearyalkohol, Ethylenglykol, Diethylenglykol, Triethylglykol, Propandiol-1,2 und -1,3, Dipropylenglykol, Tripropylenglykol, Butandiol-1,2, -1,3, 1,4 und -2,3, Pentandiol-1,5, 3-Methylpentandiol-1,5, Hexandiol-1,6, 2-Ethylhexandiol-1,3, 2-Mehtylpropandiol-1,3, 2,2-Dimethylpropandiol-1,3, 2-Butyl-2-ethylpropandiol-1,3, 2,2,4-Trimethylpentandiol-1,3, Octandiol-1,8, höhermolekulare α-Alkandile mit 9 - 18 Kohlenstoffatomen, Cyclohexandimethanol, Cyclohexandiol, Glycerin, Trimethylolpropan, Butantriol-1,2,4, Hexantriol-1,2,6, Bis(trimethylolpropan), Pentaerythrit, Mannit oder Methylglykosid.

Gegebenenfalls können als Komponente IIc) auch die aus der Polyurethanchemie an sich bekannten Hydroxypolyester, Hydroxypolyesteramide, Hydroxypolyether mit einer Funktionalität <3,5 Polythioetherpolyole, Hydroxypolycarbonate oder Hydroxypolyacetale bis zu einem Molgewicht von 1.000 eingesetzt werden.

Gegebenenfalls können dem Polymergemisch A) die an sich in der Lacktechnologie bekannten Stabilisatoren wie Antioxidantien und/oder Lichtschutzmittel zugesetzt werden, um Licht- und Wetterstabilität der Polyetherpolyacrylate weiter zu verbessern; bevorzugt werden die erfindungsgemäßen Bindemittelgemische frei von Stabilisatoren eingesetzt.

Geeignete Antioxidantien sind z.B. sterisch gehinderte Phenole wie 4-Methyl-2,6-ditert.-butylphenol (BHT) oder andere, unter der Produktklassenbezeichnung Irganox® von Ciba Geigy angebotene substituierte Phenole, Thioether (z.B. Irganox PS®, Ciba Geigy) oder Phosphite (z.B. Irgaphos®, Ciba Geigy). Geeignete Lichtschutzmittel sind z.B. HALS-Amine (Hindered Amine Light Stabilizers), wie z.B. Tinuvin® 622 D oder Tinuvin® 765 (Ciba Geigy) sowie substituierte Benzotriazole, wie z.B. Tinuvin® 234, Tinuvin® 327 oder Tinuvin® 571 (Ciba Geigy).

Die Polyhydroxykomponente II) setzt sich zu 40 - 100 Gew.-% aus IIa), 0 - 60 Gew.-% aus IIb) und 0 - 60 Gew.-% aus IIc) zusammen. Die Summe aus IIa) bis IIc) ergibt, ohne Berücksichtigung der gegebenenfalls eingesetzten Antioxidantien oder Lichtschutzmittel, 100 Gew.-%.

Bei der erfindungsgemäßen Polyisocyanatkomponente B) handelt es sich um organische Polyisocyanate mit einer mittleren NCO-Funktionalität von mindestens 2 und einem Molgewicht von mindestens 140. Gut geeignet sind vor allem (i) unmodifizierte organische Polyisocyanate des Molgewichtsbereichs 140 - 300, (ii) Lackpolyisocyanate eines Molgewichts im Bereich von 300 - 1.000 sowie (iii) Urethangruppen-aufweisende NCO-Prepolymere eines über 1.000 liegenden Molgewichtes oder Gemische aus (i) bis (iii).

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethylcyclohexan (IPDI), 1-Isocyanato-1-methyl-4-(3)-isocyanatomethyl-cyclohexan, Bis-(4-isocyanatocyclohexal)methan, 1,10-Diisocyanatodecan, 1,12-Diisocyanatodecan, Cyclohexan-1,3- und -1,4-4iisocyanat, Xylylendiisocyanat-Isomere, 2,4-Diisocyanatotoluol oder dessen Gemische mit 2,6-Diisocyanatotoluol mit vorzugsweise, bezogen auf Gemisch, bis zu 35 Gew.-% an 2,6-Diisocyanatotoluol, 2,2'-, 2,4'-4,4'-Diisocyanatodiphenylmethan oder technische Polyisocyanatgemische der Diphenylmethanreihe oder beliebige Gemische der genannten Isocyanate. Bevorzugt kommen dabei die Polyisocyanate der Diphenylmethanreihe, besonders bevorzugt als Isomerengemische, zum Einsatz.

Polyisocyanate der Gruppe (ii) sind die an sich bekannten, lösemittelfreien Lackpolyisocyanate. Unter dem Begriff "Lackpolyisocyanate" sind im Rahmen der Erfindung Verbindungen bzw. Gemische von Verbindungen zu verstehen, die durch an sich bekannte Oligomerisierungsreaktion von einfachen Diisocyanaten der unter (i) beispielhaft genannten Art erhalten werden.

Geeignete Oligomerisierungsreaktionen sind z.B. die Allophanatisierung, Biuretisierung, Carbodiimidisierung, Cyclisierung, Dimerisierung, Harnstoffbildung, Trimerisierung und/oder Urethanisierung. Oftmals laufen bei der "Oligomerisierung" mehrere der genannten Reaktionen gleichzeitig oder nacheinander ab.

Bevorzugt handelt es sich bei den "Lackpolyisocyanaten" um Polyisocyanate mit Uretdion-, Isocyanurat-, Allophanat-, Biuret-, Iminooxadiazindion- und/oder Oxadiazintrionstruktur.

Die Herstellung von derartigen Lackpolyisocyanaten ist bekannt und beispielsweise in der DE-A 1 595 273, DE-A 3 700 209 und DE-A 3 900 053 oder in der EP-A-0 330 966, EPA0 259 233, EP-A-0 377 177, EP-A-0 496 208, EP-A-0 524 501 bzw. US-A 4 385 171 beschrieben.

Bei den vorstehend beschriebenen Lackpolyisocyanaten mit Urethangruppen aufweisenden Polyisocyanaten handelt es sich um Isocyanatgruppen aufweisende Prepolymere, wie sie durch Umsetzung von nieder- oder höhermolekularen Polyhydroxylverbindungen mit überschüssigen Mengen der vorstehend genannten Dioder Polyisocyanate oder auch mit einem großen Überschuss der genannten Di- und Polyisocyanate und anschließende Entfernung des überschüssigen Polyisocyanates, z.B. durch Dünnschichtdestillation erhalten werden können. Die Herstellung der Prepolymeren erfolgt im allgemeinen bei 40 bis 140°C, gegebenenfalls unter Mitverwendung geeigneter Katalysatoren.

Zur Herstellung derartiger Prepolymere eignen sich niedermolekulare Polyhydroxylverbindungen des Molgewichtsbereichs 62 bis 299, wie beispielsweise Ethylenglykol, Propylenglykol-1,3- und Butandiol-1,4, Hexandiol-1,6, Neopentylglykol, 2-Thylhexandiol-1,3, Glycerin, Trimethylolpropan, Pentaerythrit, niedermolekulare Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole.

Polyisocyanate der Gruppe (iii) sind die an sich bekannten Isocyanatgruppen aufweisenden Prepolymere auf Basis von einfachen Diisocyanaten (i) der oben beispielhaft genannten Art und/oder auf Basis von Lackpolyisocyanaten (ii) einerseits und organischen Polyhydroxylverbindungen eines über 300 liegenden Molgewichts andererseits.

Polyisocyanate der Gruppe (iii) sind vorzugsweise Prepolymere höhermolekulare Polyhydroxylverbindungen des Molgewichtsbereichs 300 bis 20.000, vorzugsweise 1.000 bis 8.000, der aus der Polyurethanchemie an sich bekannten Art.

Höhermolekulare Polyhydroxylverbindungen zur Herstellung der Prepolymeren sind beispielsweise die den gemachten Angaben entsprechenden Polyesterpolyolen auf Basis von niedermolekularen einfachen Alkoholen der bereits beispielhaft genannten Art und mehrbasischen Carbonsäuren wie beispielsweise Adipinsäure, Sebacinsäure, Phthalsäure, Isophthalsäure, Tetrahydrophthalsäure, Hexahydrophthalsäure, Maleinsäure, den Anhydriden derartiger Säuren oder beliebigen Gemischen derartiger Säuren bzw. Anhydriden.

Auch die obigen Angaben entsprechenden Hydroxylgruppen-aufweisenden Polylactone, insbesondere Polycaprolactone sind zur Herstellung der Prepolymeren bzw. Semiprepolymeren geeignet.

Zur Herstellung der Isocyanatgruppen aufweisenden Prepolymeren ebenfalls gut geeignet sind die den obigen Ausführungen entsprechenden Polyetherpolyole, wie sie in an sich bekannte Weise durch Alkoxylierung von geeigneten Startermolekülen zugänglich sind. Geeignete Startermoleküle sind beispielsweise die oben bereits genannten einfachen Polyole, Wasser, organische Polyamine mit mindestens zwei N-H-Bindungen oder beliebige Gemische derartiger Startermoleküle. Für die Alkoxylierungsreaktion geeignete Alkylenoxide sind insbesondere Ethyloxid und/oder Propylenoxid, die in beliebiger Reihenfolge oder auch im Gemisch bei der Alkoxylierungsreaktion eingesetzt werden können.

Auch die den oben gemachten Angaben entsprechenden Polytetramethylglykolpolyether wie sie in bekannter Weise durch kationische Polymerisation von Tetrahydrofuran zugänglich sind, sind gut zur Herstellung der Prepolymeren geeignet.

Zur Herstellung der Prepolymeren ferner geeignet sind die den obigen Ausführungen entsprechenden, Hydroxylgruppen-aufweisenden Polycarbonate, wie sie beispielsweise durch Umsetzung von einfachen Diolen der oben genannten Art mit Diacrylcarbonaten, wie beispielsweise Diphenylcarbonat oder Phosgen hergestellt werden können.

Geeignet zur Herstellung der NCO-Gruppen aufweisenden Prepolymere sind ferner Polythioetherpolyole, wie sie zum Beispiel durch Polykondensation des Thiodiglykols mit sich selbst oder mit Diolen und/oder Polyolen der genannten Art erhalten werden können.

Ferner eignen sich Polyacetale, wie z.B. Polykondensationsprodukte aus Formaldehyd und Diolen bzw. Polyolen der genannten Art, wie sie unter Verwendung von sauren Katalysatoren wie Phosphorsäure oder p-Toluolsulfonsäure erhalten werden können.

Selbstverständlich können auch Gemische der beispielhaft genannten Hydroxylverbindungen zur Herstellung der Prepolymeren eingesetzt werden.

Zur Herstellung der erfindungsgemäßen Beschichtungsmittel werden die Komponenten A) und B) miteinander in solchen Mengenverhältnissen vermischt, die einem NCO : OH-Äquivalentverhältnis von 0,8 : 1 bis 1,5 : 1, vorzugsweise 0,9 : 1 bis 1,3 : 1 entsprechen.

Gegebenenfalls werden die üblichen Hilfs- und Zusatzstoffe der Beschichtungsmitteltechnologie zugemischt. Hierzu gehören beispielsweise Verlaufsmittel, viskositätskontrollierende Zusätze, Pigmente, Füllstoffe, Mattierungsmittel, UV-Stabilisatoren und Antioxidantien sowie Katalysatoren für die Vernetzungsreaktion. Diese Verbindungen werden normalerweise vor der Vermischung der Komponenten A) und B) der Komponente A) zugesetzt und vermischt.

Durch die erfindungsgemäße Verwendung der lösemittelfreien, dauertemperaturbeständigen Zweikomponenten-Polyurethan-Reaktivsysteme und gegebenenfalls der Hilfs- und Zusatzstoffe der beispielhaft genannten Art, können beliebige metallische Substrate selbst unter Kathodenschutzbedingungen bei Dauertemperaturbelastungen von bis zu 30°C geschützt werden.

Bevorzugt handelt es sich bei den metallischen Substraten, z.B. um Spundwände, Schleusen, Schiffe, Röhren und andere metallische Objekte im Marine-, Offshore- und Onland-Bereich.

### Beispiele (allgemein)

Die Anreibung der Beschichtungsstoffe erfolgte stets in dem OH-Gruppen aufweisenden Gemisch mittels Vakuumdissolver. Mit einer 2K-Airless-Spritzanlage wurden die lösemittelfreien Beschichtungsstoffe in Schichtdicken von 500 - 1200 µm auf 3 mm dicke, SA 2 ½ gestrahlte Stahlbleche appliziert. Nach einer einwöchigen Lagerung unter Laborbedingungen wurden die Beschichtungen auf Kathodenschutz verträglich sowie Dehnbarkeit und Schlagzähigkeit geprüft.

Bei den Beschichtungsstoffen wurden Topfzeit und die Zeit zur Spachtelverarbeitung (Reparatur, Field Joints) festgestellt.

| Kathodenschutz-Test gemäß ASTMG8 | |
|---|---|
| Medium | 5 %ige NaCl Lösung |
| Temperatur | 30°C |
| Spannung | U_{H} = -1260 mV |
| Dauer | 28 Tage |

- Beurteilungskriterien:: Filmabbau an Oberfläche
Konstanz der Stromaufnahme
Unterwanderung an künstlicher Verletzung bis 10 mm
- Schlagfestigkeit:: ASTM D 2794-93
- Shore D Härte:: DIN 53505
- Bruchdehnung freier Filme:: DIN EN ISO 527
- Topfzeit: (min oder sec)
Spachtelverarbeitung (min)

### Beispiel 1 - 5 Nullwerte

**Tabelle I**

| | | **Beisp. 1** | **Beisp. 2** | **Beisp. 3** | **Beisp. 4** | **Beisp. 5** |
|---|---|---|---|---|---|---|
| | | **(Teile)** | **(Teile)** | **(Teile)** | **(Teile)** | **(Teile)** |
| **Komp. 1** | | | | | | |
| | | | | | | |
| Desmophen® LS 2358 | (Bayer) | 22,7 | 12,75 | 73,84 | 45,4 | 22,7 |
| Desmophen® VP LS 2285 | (Bayer) | - | 12,75 | - | 45,4 | - |
| 1,4-Butandiol | (Bayer) | - | - | 14,4 | 6,92 | - |
| Baylith® L-Paste | (Talke) | 5,4 | 5,4 | 21,6 | 21,6 | 5,4 |
| Anti-Terra 204® | (Byk Chemie) | 0,4 | 0,4 | 1,6 | 1,6 | 0,0 |
| Härter DT | (Bayer) | 0,4 | 0,4 | 1,6 | 1,6 | 0,4 |
| Crayvallac® Super | (Langer & Co) | 0,4 | 0,4 | 1,6 | 1,6 | 0,4 |
| Talc BC-Standard® | (Naintsch Mineralwerke) | - | - | 22,4 | 22,4 | - |
| Naintsch® BC Standard | (Naintsch Mineralwerke) | 5,6 | 5,6 | - | - | 5,6 |
| Plastorit® Naintsch 0 | (Naintsch Mineralwerke) | 7,7 | 7,7 | 30,8 | 30,8 | 7,7 |
| Schwerspat EWO® | (Sachtleben) | 18,9 | 18,9 | 75,6 | 75,6 | 18,9 |
| Bayertitan® R-KB-4 | (Bayer) | 3,7 | 3,7 | - | - | 3,7 |
| Tronox® R-KB-4 | (Kerr Mc Gee) | - | - | 14,8 | 14,8 | - |
| | | | | | | |

| **Komp. 2** | | | | | | |
|---|---|---|---|---|---|---|
| | | | | | | |
| Desmodur® VL | (Bayer) | 32,05 | 27,5 | 128,2 | 128,2 | 31,5 |
| Desmodur® E 14 | (Bayer) | - | - | - | - | 5,0 |
| | | | | | | |
| **CD-Test (30°C)** | | | | | | |
| | | | | | | |
| Schichtdicke (µm) | | 1050 | 840 | 730 | 780 | 1120 |
| Dauer | | 29 d | 29 d | 28 d | 28 d | 29 d |
| | | | | | | |

| **Auswertung** | | | | | | |
|---|---|---|---|---|---|---|
| | | | | | | |
| Stromaufnahme (Anfang) | [mA] | 12,6 | 14,5 | 25 | 32 | 12 |
| Stromaufnahme nach 20 d | [mA] | 22,5 | 17 | 18,5 | 33,5 | 23 |
| Stromaufnahme (Ende) | [mA] | 22 | 19 | 15 | 37,5 | 23 |
| Aussehen des Films (Oberflächenabbau) | | keine | keine | keine | Keine | keine |
| Unterwanderung an künstlicher [mm] Verletzung [ASTMG 42-85] | | 0-1 | 0-1 | 0 | 0 | 2 |
| Schlagfestigkeit [J/mm] | | 7,5 | 7,8 | 8,2 | 8,2 | 8,5 |
| Shore D Härte | | 82 | 80 | 80 | 81 | 77 |
| Bruchdehnung [%] | | 2,0 | 2,0 | 2,3 | 2,3 | 17 |
| Topfzeit [sec] | | 120 | 120 | 90 | 90 | 130 |
| Spachtelbarkeit [min] | | 0 | 0 | 0 | 0 | 0 |

### Beispiele (erfindungsgemäß)

Die nachfolgenden, erfindungsgemäßen Beispiele (Tabelle II - VII) basieren auf den Formulierungen der 0-Werte in Tabelle I. PVK sowie das NCO/OH-Verhältnis bleiben konstant. Die Desmophene LS 2358 und/oder LS 2285 und/oder Butandiol 1.4 werden anteilmäßig durch die erfindungsgemäßen Weichharze oder ihre Kombinationen ausgetauscht.

**Tabelle II**

| Beispiele 1-5 (erfindungsgemäß) gemäß 0-Wert Beispiel 1: Tabelle I | | | | | | |
|---|---|---|---|---|---|---|
| | | **Beisp. 1** | **Beisp. 2** | **Beisp. 3** | **Beisp. 4** | **Beisp. 5** |
| | | **(Teile)** | **(Teile)** | **(Teile)** | **(Teile)** | **(Teile)** |
| **Komp. 1** | | | | | | |
| | | | | | | |
| Desmophen® LS 2358 | (Bayer) | 13,6 | 17,0 | 15,3 | 13,6 | 13,6 |
| Hordaflex SP | (Hoechst) | 9,1 | | 3,7 | 9,1 | |
| Desavin® | (Bayer) | - | 5,7 | 3,7 | - | 9,1 |
| Baylith® L-Paste | (Talke) | 5,4 | 5,4 | 5,4 | 5,4 | 5,4 |
| Anti-Terra 204® | (Byk Chemie) | 0,4 | 0,4 | 0,4 | 0,4 | 0,4 |
| Härter DT® | (Bayer AG) | 0,4 | 0,4 | 0,4 | 0,4 | 0,4 |
| Crayvallac® Super | (Langer & Co) | 0,4 | 0,4 | 0,4 | 0,4 | 0,4 |
| Talc BC-standard® | (Naintsch Mineralwerke) | - | - | - | - | - |
| Naintsch® BC Standard | (Naintsch Mineralwerke) | 4,3 | 4,8 | 4,5 | 4,3 | 4,7 |
| Plastorit® Naintsch 0 | (Naintsch Mineralwerke) | 5,9 | 6,6 | 6,3 | 5,9 | 6,4 |
| Schwerspat EWO® | (Sachtleben) | 14,6 | 16,2 | 15,4 | 14,6 | 15,8 |
| Bayertitan® R-KB-4 | (Bayer) | 2,9 | 3,2 | 3,0 | 2,9 | 3,1 |
| Tronox® R-KB-4 | (Kerr Mc Gee) | - | - | - | | |
| | | | | | | |

| **Komp. 2** | | | | | | |
|---|---|---|---|---|---|---|
| | | | | | | |
| Desmodur® VL | (Bayer) | 19,5 | 24 | 21,6 | 19,5 | 18,9 |
| Desmodur® E 14 | (Bayer) | - | - | - | - | 3,0 |
| | | | | | | |

| **CD-Test (30°C)** **ASTMG 42-85** | | | | | | |
|---|---|---|---|---|---|---|
| | | | | | | |
| Schichtdicke (µm) | | 850 | 810 | 790 | 600 | 820 |
| Dauer (d) | | 28 | 28 | 28 | 28 | 28 |
| Stromaufnahme (Anfang) | [mA] | 18 | 19,5 | 21 | 35 | 27 |
| Stromaufnahme (Ende) | [mA] | 25 | 19 | 19 | 29,5 | 22 |
| Aussehen des Films (Oberflächenabbau) | 0 | 0 | 0 | 0 | 0 | Gering |
| Unterwanderung an künstlicher Verletzung | | 0-1 | 0-1 | 0-1 | 0 | 1 |
| Schlagfestigkeit [J/mm] | [J/mm] | 12 | 15 | 12 | 13 | 17 |
| Shore D Härte | | 69 | 68 | 65 | 65 | 65 |
| Bruchdehnung (%) | | 15 | 17 | 17 | 17 | 20 |
| Topfzeit (min) | | 15 | 15 | 14 | 15 | 17 |
| Spachtelharze (min) | | 45 | 45 | 45 | 45 | 55 |

**Tabelle III**

| Beispiele 1-4 (erfindungsgemäß) gemäß 0-Wert Beispiel 2: Tabelle I | | | | | |
|---|---|---|---|---|---|
| | | **Beisp. 1** | **Beisp. 2** | **Beisp. 3** | **Beisp. 4** |
| | | **(Teile)** | **(Teile)** | **(Teile)** | **(Teile)** |
| **Komp. 1** | | | | | |
| | | | | | |
| Desmophen® LS 2358 | (Bayer) | 7,65 | 9,56 | 8,65 | 7,65 |
| Desmophen® VP LS 2285 | (Bayer) | 7,65 | 9,56 | 8,65 | 7,65 |
| Hordaflex SP® | (Hoechst) | 11,1 | - | 4,1 | 11,1 |
| Desavin® | (Bayer) | - | 5,38 | 4,1 | - |
| Desmodur® VL | (Bayer) | 16,50 | 20,6 | 18,7 | 16,50 |
| Desmodur® E 14 | (Bayer) | - | - | - | - |
| | | | | | |

| **CD-Test (30°C)** **ASTMG 42-85** | | | | | |
|---|---|---|---|---|---|
| | | | | | |
| Schichtdicke (µm) | | 880 | 820 | 890 | 650 |
| Dauer (d) | | 28 | 28 | 28 | 28 |
| | | | | | |
| Stromaufnahme Anfang | [mA] | 15 | 19 | 13 | 19 |
| Stromaufnahme Ende | [mA] | 22 | 27 | 14 | 24 |
| Aussehen des Films, Oberflächenabbau | Kein | Kein | Kein | Kein | Kein |
| Unterwanderung an künstlicher Verletzung [mm] | | 1 | 1-2 | 1 | 2-3 |
| Schlagfestigkeit [J/mm] | [J/mm] | 11 | 14 | 15 | 15 |
| Shore D Härte | | 69 | 70 | 69 | 68 |
| Bruchdehnung (%) | | 14 | 17 | 15 | 14 |
| Topfzeit (min) | | 15 | 14 | 13 | 13 |
| Spachtelharze (min) | | 45 | 45 | 45 | 45 |

**Tabelle IV**

| Beispiele 1-4 (erfindungsgemäß) gemäß 0-Wert Beispiel 3: Tabelle I | | | | | |
|---|---|---|---|---|---|
| | | **Beisp. 1** | **Beisp. 2** | **Beisp. 3** | **Beisp. 4** |
| | | **(Teile)** | **(Teile)** | **(Teile)** | **(Teile)** |
| **Komp. 1** | | | | | |
| | | | | | |
| Desmophen® LS 2358 | (Bayer) | 44,30 | 55,38 | 44,30 | 50,2 |
| Butandiol 1.4 | (Bayer) | 8,64 | 10,80 | 8,64 | 9,8 |
| Hordaflex SP® | (Hoechst) | 35,30 | - | - | - |
| Desavin® | (Bayer) | - | 22,06 | - | 14,12 |
| Polyacrylnitril | (Bayer) | - | - | 35,30 | 14,12 |
| | | | | | |

| **Komp. 2** | | | | | |
|---|---|---|---|---|---|
| | | | | | |
| Desmodur® VL | (Bayer) | 76,92 | 96,15 | 76,92 | 87,2 |
| | | | | | |

| **CD-Test (30°C)** **ASTMG 42-85** | | | | | |
|---|---|---|---|---|---|
| | | | | | |
| Schichtdicke (µm) | | 880 | 790 | 770 | 820 |
| Dauer (d) | | 28 | 28 | 28 | 28 |
| | | | | | |
| Stromaufnahme Anfang | [mA] | 23 | 21 | 25 | 25 |
| Stromaufnahme Ende | [mA] | 28 | 28 | 31 | 30 |
| Aussehen des Films, Oberflächenabbau | Kein | Kein | Kein | Kein | Kein |
| Unterwanderung an künstlicher Verletzung [mm] | | 0-1 | 1 | 1 | 0-1 |
| Schlagfestigkeit [J/mm] | [J/mm] | 11 | 16 | 14 | 14 |
| Shore D Härte | | 72 | 70 | 71 | 71 |
| Bruchdehnung (%) | | 12 | 14 | 13 | 15 |
| Topfzeit | (min) | 15 | 15 | 14 | 12 |
| Spachtelbarkeit (min) | (min) | 45 | 45 | 45 | 45 |

**Tabelle V**

| Beispiele 1-4 (erfindungsgemäß) gemäß 0-Wert Beispiel 4 Tabelle I | | | | | |
|---|---|---|---|---|---|
| | | **Beisp. 1** | **Beisp. 2** | **Beisp. 3** | **Beisp. 4** |
| | | **(Teile)** | **(Teile)** | **(Teile)** | **(Teile)** |
| **Komp. 1** | | | | | |
| | | | | | |
| Desmophen® LS 2358 | (Bayer) | 27,25 | 34,05 | 30,9 | 27,25 |
| Desmophen® LS 2285 | (Bayer) | 27,25 | 34,05 | 30,9 | 27,25 |
| Butandiol 1.4 | (Bayer) | 4,15 | 5,19 | 4,7 | 4,15 |
| Hordaflex SP® | (Hoechst) | 39,1 | - | 15,6 | - |
| Polyacrylnitril | (Bayer) | - | - | - | 39,1 |
| | | | | | |

| **Komp. 2** | | | | | |
|---|---|---|---|---|---|
| | | | | | |
| Desmodur VL | (Bayer) | 76,9 | 96,15 | 87,2 | 76,9 |
| | | | | | |

| **CD-Test (30°C)** **ASTMG 42-85** | | | | | |
|---|---|---|---|---|---|
| | | | | | |
| Schichtdicke (µm) | | 830 | 800 | 700 | 810 |
| Dauer (d) | | 28 | 28 | 28 | 28 |
| | | | | | |
| Stromaufnahme Anfang | [mA] | 14,5 | 16 | 21 | 22 |
| Stromaufnahme Ende | [mA] | 19 | 15 | 20 | 25 |
| Aussehen des Films, Oberflächenabbau | | Kein | Kein | Kein | Kein |
| Unterwanderung an künstlicher Verletzung [mm] | | 0-1 | 1-2 | 2 | 2 |
| Shore D Härte | | 71 | 70 | 70 | 72 |
| Bruchdehnung (%) | | 14 | 18 | 13 | 15 |
| Topfzeit (min) | | 15 | 15 | 14 | 12 |
| Spachtelbarkeit (min) | | 45 | 45 | 45 | 45 |

**Tabelle VI**

| Beispiele 1-4 (erfindungsgemäß) gemäß 0-Wert Beispiel 5 Tabelle I | | | | | |
|---|---|---|---|---|---|
| | | **Beisp. 1** | **Beisp. 2** | **Beisp. 3** | **Beisp. 4** |
| | | **(Teile)** | **(Teile)** | **(Teile)** | **(Teile)** |
| **Komp. 1** | | | | | |
| | | | | | |
| Desmophen® LS 2358 | (Bayer) | 13,6 | 15,4 | 15,4 | 13,6 |
| Hordaflex SP® | (Hoechst) | 4,55 | 3,6 | - | - |
| Desavin® | (Bayer) | - | 3,6 | 3,6 | - |
| Polyacrylnitril | (Bayer) | 4,55 | - | 3,6 | 9,1 |
| | | | | | |

| **Komp. 2** | | | | | |
|---|---|---|---|---|---|
| | | | | | |
| Desmodur® VL | (Bayer) | 18,5 | 21,4 | 21,4 | 18,9 |
| Desmodur® E 14 | (Bayer) | 3,0 | 3,4 | 3,4 | 3,0 |
| | | | | | |

| **CD-Test (30°C)** **ASTMG 42-85** | | | | | |
|---|---|---|---|---|---|
| | | | | | |
| Schichtdicke (µm) | | 830 | 770 | 800 | 790 |
| Dauer (d) | | 28 | 28 | 28 | 28 |
| | | | | | |
| Stromaufnahme Anfang | [mA] | 17 | 24 | 13 | 20 |
| Stromaufnahme Ende | [mA] | 20 | 21 | 29 | 24 |
| Aussehen des Films, Oberflächenabbau | | Kein | Kein | Kein | Kein |
| Unterwanderung an künstlicher Verletzung [mm] | | 0 | 1-2 | 0 | 1 |
| Shore D Härte | | 16 | 17 | 17 | 15 |
| Bruchdehnung (%) | | 65 | 63 | 63 | 66 |
| Topfzeit (min) | | 17 | 19 | 19 | 17 |
| Spachtelbarkeit (min) | | 15 | 12 | 12 | 14 |

**Tabelle VII**

| Beispiele 1-5 (erfindungsgemäß) gemäß 0-Wert Beispiel 2 Tabelle I | | | | | | |
|---|---|---|---|---|---|---|
| | | **Beisp. 1** | **Beisp. 2** | **Beisp. 3** | **Beisp. 4** | **Beisp. 5** |
| | | **(Teile)** | **(Teile)** | **(Teile)** | **(Teile)** | **(Teile)** |
| **Komp. 1** | | | | | | |
| | | | | | | |
| Desmophen® LS 2358 | (Bayer) | 7,65 | 7,65 | 7,65 | 7,65 | 7,65 |
| Desmophen® LS 2285 | (Bayer) | 7,65 | 7,65 | 7,65 | 7,65 | 7,65 |
| Cerachlor 70/42® | (Akzo-ICL) | 11,1 | - | - | 11,1 | - |
| Rishichlor® | (Rishiroop) | - | 11,1 | - | - | - |
| Polychlordibutyloxybenzol | (Rishiroop) | - | - | 11,1 | - | 11,1 |
| | | | | | | |

| **Komp. 2** | | | | | | |
|---|---|---|---|---|---|---|
| | | | | | | |
| Desmodur® VL | (Bayer) | 16,5 | 16,5 | 16,5 | | |
| Desmodur® N 3600 | (Bayer) | | | | 22,6 | 22,6 |
| | | | | | | |

| **CD-Test (30°C)** **ASTMG 42-85** | | | | | | |
|---|---|---|---|---|---|---|
| | | | | | | |
| Schichtdicke (µm) | | 780 | 730 | 740 | 800 | 710 |
| Dauer (d) | | 28 | 28 | 28 | 28 | 28 |
| Stromaufnahme (Anfang) | [mA] | 24 | 2o | 35 | 21 | 24 |
| Stromaufnahme (Ende) | [mA] | 31 | 23 | 27 | 30 | 38 |
| Aussehen des Films (Oberflächenabbau) | | Kein | Kein | Kein | Gering | Gering |
| Unterwanderung an künstlicher Verletzung | | | | | | |
| Verletzung [mm] | | 0 | 0 | 0-1 | 2-3 | 2-3 |
| Schlagfestigkeit [J/mm] | | 11 | 11 | 12 | 15 | 16 |
| Shore D Härte | | 69 | 69 | 68 | 64 | 64 |
| Bruchdehnung (%) | | 14 | 13 | 14 | 17 | 18 |
| Topfzeit (min) | | 15 | 15 | 14 | 19 | 19 |
| Spachtelharze (min) | | 45 | 45 | 45 | 55 | 55 |

## Patentansprüche

1. Verwendung von lösemittelfreien, zwei Komponenten Polyurethan-Reaktivsystemen aus
A) einem lösemittelfreien Polymergemisch bestehend aus
I) 5 - 50 Gew.-% einer OH-gruppenfreien Komponente bestehend aus
a) 100 - 0 Gew.-% eines chlorierten Paraffins oder Dibutoxybenzols,
b) 100-0 Gew.-% eines Di-[phenoxy-alkyl]formals,
c) 100-0 Gew.-% eines Polyacrylnitrils oder
d) einem Gemisch aus a) und b), wobei das Verhältnis von a): b) = 99:1 bis 1:99 Gew.-% beträgt, oder
e) einem Gemisch aus a) und c), wobei das Verhältnis von a) : c) = 99:1 bis 1:99 Gew.-% beträgt, oder
f) einem Gemisch aus b) und c), wobei das Verhältnis von b) : c) = 99:1 bis 1:99 Gew.-% beträgt, und
II) 95 - 50 Gew.-% einer Hydroxylgruppen aufweisenden Komponente bestehend aus
a) 40 - 100 Gew.-% einer hydroxygruppenaufweisenden, ethergruppenhaltigen Komponente mit einer Funktionalität ≥ 3,5 mit einem Molgewicht von 280-1000 oder einem Gemisch mehrerer solcher Komponenten sowie
b) 0 - 60 Gew.-% von hydroxyfunktionellen Polyetherpolyacrylaten sowie
c) 0 - 60 Gew.-% weiterer hydroxyfunktioneller Verbindungen, wobei sich die Gew.-% von II a) bis IIc) immer zu 100 Gew.-% addieren, und
B) einer Polyisocyanatkomponente, bestehend aus mindestens einem organischen Polyisocyanat, wobei das NCO:OH-Äquivalentverhältnis zwischen 0,8:1 und 1,5:1 liegt, zur Herstellung von bis zu 30°C dauertemperaturbeständigen, dehnfähiger und kathodenschutzverträglichen Beschichtungen.

2. Verwendung nach Anspruch 1, **dadurch gekennzeichnet, dass** das NCO/OH-Verhältnis 0,9:1 bis 1,3:1 beträgt.

3. Verwendung nach Anspruch 1, **dadurch gekennzeichnet, dass** als chloriertes Weichharz Polychlorodibutoxybenzol verwendet wird.

4. Verwendung gemäß Anspruch 1, **dadurch gekennzeichnet, dass** das eingesetzte Polyacrylnitril ein Molekulargewicht von 1000 - 3500 besitzt.

5. Verwendung gemäß Anspruch 1, **dadurch gekennzeichnet, dass** Di-[phenoxyethyl]fonnal verwendet wird.

6. Verwendung gemäß Anspruch 1, **dadurch gekennzeichnet, dass** Gemische der Weichharze gemäß Ansprüchen 3, 4, 5 und 6 eingesetzt werden.

7. Verwendung nach Anspruch 1, **dadurch gekennzeichnet, dass** ein Zweikomponenten-Polyurethan-Reaktivsystem eingesetzt wird, bei dem das Molgewicht der Komponente IIa) 350 - 700 beträgt.

8. Verwendung nach Anspruch 1, **dadurch gekennzeichnet, dass** ein Zweikomponenten-Polyurethan-Reaktivsystem eingesetzt wird, bei dem die Funktionalität der Komponente IIa) ≥ 4 ist.

9. Verwendung nach Anspruch 1, **dadurch gekennzeichnet, dass** ein Zweikomponenten-Polyurethan-Reaktivsystem eingesetzt wird, bei dem das Molgewicht der Komponente IIc) zwischen 32 und 350 liegt.

10. Verwendung nach Anspruch 1, **dadurch gekennzeichnet, dass** ein Zweikomponenten-Polyurethan-Reaktivsystem eingesetzt wird, bei dem es sich bei der Komponente B um ein aromatisches, organisches Polyisocyanat handelt.

11. Verwendung nach Anspruch 1, **dadurch gekennzeichnet, dass** ein Zweikomponenten-Polyurethan-Reaktivsystem eingesetzt wird, bei dem es sich um ein aliphatisches, organisches Polyisocyanat handelt.

12. Verwendung gemäß Anspruch 1, **dadurch gekennzeichnet, dass** das Zweikomponenten-Polyurethan-Reaktivsystem auf gegebenenfalls kathodisch geschützte, metallische Substrate aufgebracht wird.

13. Verwendung nach Ansprüchen 1 bis 14, **dadurch gekennzeichnet, dass** es sich bei den gegebenenfalls kathodisch geschützten Substraten um Spundwände, Schleusen, Röhren, Schiffe und andere metallische Objekte im Marine-, Offshore und Onland-Bereich handelt.

## Claims

1. Use of solvent-free, two-component polyurethane reactive systems consisting of
A) a solvent-free polymer mixture consisting of
I) 5-50 wt.% of a component free from OH groups consisting of
a) 100 - 0 wt.% of a chlorinated paraffin or dibutoxybenzene,
b) 100 - 0 wt.% of a di-[phenoxy-alkyl]formal
c) 100 - 0 wt.% of a polyacrylonitrile or
d) a mixture of a) and b), wherein the ratio of a) : b) = 99:1 to 1:99 wt.%, or
e) a mixture of a) and c) wherein the ratio of a) : c) = a) : c) = 99:1 to 1:99 wt.%, or
f) a mixture of b) and c), wherein the ratio of b) : c) = 99:1 to 1:99 wt.% and
II) 95 - 50 wt.% of a component having hydroxyl groups consisting of
a) 40 - 100 wt.% of a component having hydroxy groups and containing ether groups, with a functionality of ≥ 3.5 and a molecular weight of 280-1000 or a mixture of several such components and also
b) 0 - 60 wt.% of hydroxyfunctional polyetherpolyacrylates and also
c) 0 - 60 wt.% of other hydroxyfunctional compounds, wherein the wt.% of IIa) to IIc) always amounts to 100 wt.%, and
B) a polyisocyanate component, consisting of at least one organic polyisocyanate, wherein the NCO:OH equivalent ratio is 0.8:1 to 1.5:1, for the production of coatings, which have long-term resistance to temperatures up to 30°C, are extensible and tolerate cathodic protection.

2. Use according to claim 1, **characterised in that** the NCO/OH ratio is 0.9:1 to 1.3:1.

3. Use according to claim 1, **characterised in that** polychlorodibutoxybenzene is used as the chlorinated soft resin.

4. Use according to claim 1, **characterised in that** the polyacrylonitrile used has a molecular weight of 1000 - 3500.

5. Use according to claim 1, **characterised in that** di-[phenoxyethyl]formal is used.

6. Use according to claim 1, **characterised in that** mixtures of the soft resins according to claims 3, 4, 5 and 6 are used.

7. Use according to claim 1, **characterised in that** a two-component polyurethane reactive system is used, in which the molecular weight of the component IIa) is 350 - 700.

8. Use according to claim 1, **characterised in that** a two-component polyurethane reactive system is used, in which the functionality of component IIa) is ≥ 4.

9. Use according to claim 1, **characterised in that** a two-component polyurethane reactive system is used, in which the molecular weight of component IIc) is 32 to 350.

10. Use according to claim 1, **characterised in that** a two-component polyurethane reactive system is used, in which component B is an aromatic, organic polyisocyanate.

11. Use according to claim 1, **characterised in that** a two-component polyurethane reactive system is used, which is an aliphatic organic polyisocyanate.

12. Use according to claim 1, **characterised in that** the two-component polyurethane reactive system is applied to optionally cathodically protected, metallic substrates.

13. Use according to claims 1 to 12, **characterised in that** the optionally cathodically-protected substrates are sheet pilings, locks, pipes, ships and other metallic objects in the marine-, offshore and onshore industries.

## Revendications

1. Utilisation de systèmes réactifs de polyuréthane biconstituants, exempts de solvant, constitués
A) d'un mélange polymère exempt de solvant constitué de
I) 5-50 % en poids d'un constituant exempt de groupe OH constitué de
a) 100-0 % en poids d'une paraffine chlorée ou de dibutoxybenzène,
b) 100-0 % en poids d'un di-[phénoxy-alkyl]formal
c) 100-0 % en poids d'un polyacrylonitrile ou
d) d'un mélange constitué de a) et de b), le rapport de a):b) = 99:1 à 1:99 % en poids, ou
e) d'un mélange constitué de a) et de c), le rapport de a):c) = 99:1 à 1:99 % en poids, ou
f) d'un mélange constitué de b) et de c), le rapport de b):c) = 99:1 à 1:99 % en poids, et
II) 95-50 % en poids d'un constituant présentant un groupe hydroxyle constitué de
a) 40-100 % en poids d'un constituant présentant un groupe hydroxy, contenant un groupe éther avec une fonctionnalité ≥ 3,5 ayant un poids molaire de 280-1 000 ou d'un mélange de plusieurs tels constituants ainsi que de
b) 0-60 % en poids de polyétherpolyacrylates hydroxyfonctionnels ainsi que de
c) 0-60 % en poids d'autres composés hydroxyfonctionnels, les % en poids de II a) à II c) s'additionnant toujours jusqu'à 100 % en poids, et
B) d'un constituant de polyisocyanate constitué d'au moins un polyisocyanate organique, le rapport d'équivalent NCO:OH étant compris entre 0,8:1 et 1,5:1, pour la préparation de revêtements résistants en permanence à une température jusqu'à 30°C, pouvant être dilatés et supportant une protection de cathode.

2. Utilisation selon la revendication 1, **caractérisée en ce que** le rapport NCO/OH est compris entre 0,9:1 et 1,3:1.

3. Utilisation selon la revendication 1, **caractérisée en ce que** l'on utilise comme résine molle chlorée du polychlorodibutoxybenzène.

4. Utilisation selon la revendication 1, **caractérisée en ce que** le polyacrylonitrile utilisé possède un poids moléculaire de 1 000-3 500.

5. Utilisation selon la revendication 1, **caractérisée en ce que** l'on utilise du di-[phénoxy-éthyl]formal.

6. Utilisation selon la revendication 1, **caractérisée en ce que** l'on utilise des mélanges des résines molles selon les revendications 3, 4, 5 et 6.

7. Utilisation selon la revendication 1, **caractérisée en ce que** l'on utilise un système réactif de polyuréthane biconstituant pour lequel le poids molaire du constituant II a) est de 350-700.

8. Utilisation selon la revendication 1, **caractérisée en ce que** l'on utilise un système réactif de polyuréthane biconstituant pour lequel la fonctionnalité du constituant II a) ≥ 4.

9. Utilisation selon la revendication 1, **caractérisé en ce que** l'on utilise un système réactif de polyuréthane biconstituant pour lequel le poids molaire du constituant II c) est compris entre 32 et 350.

10. Utilisation selon la revendication 1, **caractérisée en ce que** l'on utilise un système réactif de polyuréthane biconstituant pour lequel il s'agit pour le constituant B d'un polyisocyanate organique aromatique.

11. Utilisation selon la revendication 1, **caractérisée en ce que** l'on utilise un système réactif de polyuréthane biconstituant pour lequel il s'agit d'un polyisocyanate organique aliphatique.

12. Utilisation selon la revendication 1, **caractérisée en ce que** l'on applique sur des substrats métalliques éventuellement cathodiquement protégés le système réactif de polyuréthane biconstituant.

13. Utilisation selon les revendications 1 à 12, **caractérisée en ce qu'**il s'agit pour les substrats éventuellement cathodiquement protégés de cloisons d'écluses, d'écluses, de canalisations, de bateaux et d'autres objets métalliques dans la marine-Offshore et dans le domaine Onland.
